# EUROPEAN PATENT APPLICATION

(11) **EP 1 342 569 A1**
(43) Date of publication of application: **10.09.2003**
(21) Application number: 03004390.5
(22) Date of filing: 03.03.2003
(51) Int. Cl.: B41C 1/10

(54) **Rotating drum**

(30) Priority: 06.03.2002 JP 2002060024
(71) Applicant: FUJI PHOTO FILM CO., LTD., Kanagawa 250-01 (JP)
(72) Inventor: Hashiguchi, Akihiro, Fuji Photo Film Co., Ltd., Ashigarakami-gun, Kanagawa (JP); Fukui, Takashi, Fuji Photo Film Co., Ltd., Ashigarakami-gun, Kanagawa (JP)
(74) Representative: Klunker . Schmitt-Nilson . Hirsch

(57) **Abstract**

A rotating drum (10) with a reinforcing member (40) is disclosed. The reinforcing member resists centrifugal force applied due to high speed rotation. Both open ends of a plate cylinder of the drum are closed by side covers (38) at which a shaft (34) is provided. Leading end grasping portions (24), for allowing a printing plate to be trained about and fixed to an outer peripheral surface of the plate cylinder, are provided at the outer peripheral surface of the plate cylinder. A disc-shaped reinforcing member (40) is fixed to an inner peripheral surface of the plate cylinder at a center in an axial direction of the plate cylinder.

## Description

### BACKGROUND OF THE INVENTION

### Technical Field

The present invention relates to a rotating drum, and in particular, to a rotating drum around whose outer peripheral surface a sheet material is trained and which is rotated at high speed.

### Description of the Related Art

An image recording device, such as a printing plate exposure device or the like, is provided with a rotating drum around which a sheet-shaped printing plate for a printer (i.e., a PS plate) is trained and held, and which is for exposure of a predetermined image onto the printing plate which is in this state of being trained around and held at the rotating drum. The rotating drum has a tubular plate cylinder, and has, at the outer peripheral surface of the plate cylinder, a printing plate holding mechanism for holding the printing plate in a state in which the printing plate is trained around the outer peripheral surface of the plate cylinder.

In such a printing plate exposure device, while the rotating drum, around whose plate cylinder a printing plate is trained and held, is rotated at high speed around the axis of the plate cylinder and a light source is moved along the axial direction of the rotating drum with respect to the printing plate which is being rotated at high speed together with the rotating drum, a laser beam, which is modulated on the basis of image data, is illuminated onto the printing plate. In this way, the printing plate is exposed on the basis of the image data. This exposure processing is so-called scan-exposure in which the light source of the laser beam is moved in the axial direction of the rotating drum while the rotating drum is rotated. The processing by the rotating of the rotating drum is main scanning, and the movement of the light source of the laser beam is subscanning.

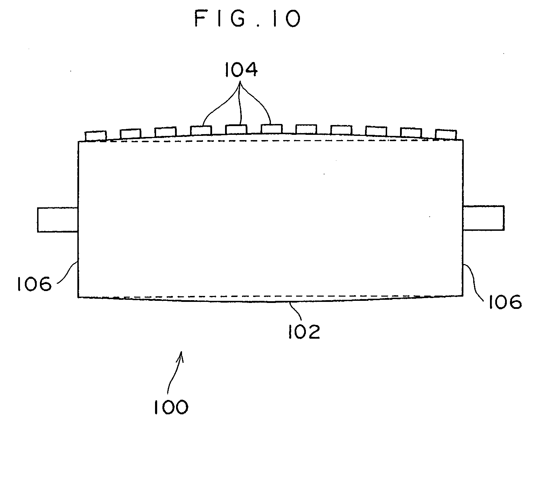

Here, the state at the time when a rotating drum 100 is rotating at high speed is shown in side view in Fig. 10. When the rotating drum 100 rotates at high speed, centrifugal force is applied to an entire plate cylinder 102. Because the plate cylinder 102 is hollow, the plate cylinder 102 deforms (swells) in the radial direction as shown in Fig. 10 due to the centrifugal force. This deformation is great at the portion where leading end grasping portions 104, which have weight, are provided. Such deformation of the plate cylinder 102 must be suppressed as it is a cause of warping of the image recorded on the printing plate.

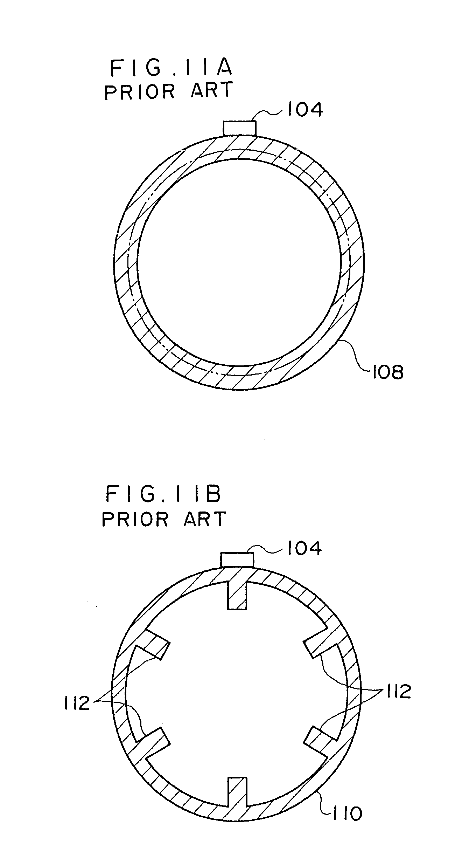

Conventionally, as shown in Fig. 11A, the thickness of a plate cylinder 108 is made larger. Or, as shown in Fig. 11B, a plurality of reinforcing ribs 112 are formed integrally at the inner peripheral surface of a plate cylinder 110 along the axial direction of the plate cylinder 110 so as to suppress deformation of the plate cylinder 110.

However, when the plate cylinder 108 is made thicker, not only does the cost of materials increase, but also, the weight increases and the inertial load at the time of rotation increases. Accordingly, measures for improving the specifications of internal peripheral equipment, such as the motor, the power transmission device, and the like, are needed, and this also results in increased costs.

Moreover, when the ribs 112 are provided, an increase in weight caused by the added weight of the ribs 112 cannot be avoided. Further, the mold for molding becomes complex, which also results in increased costs.

### SUMMARY OF THE INVENTION

In view of the aforementioned, an object of the present invention is to provide a rotating drum which can, inexpensively and with a simple structure, suppress deformation at the time of high speed rotation.

The rotating drum of the present invention is a rotating drum having a plate cylinder which is formed in a tubular form and around whose outer peripheral surface a sheet material is trained. The rotating drum rotates at high speed around a shaft of the plate cylinder. The rotating drum comprises a deformation suppressing device provided at the plate cylinder and suppressing deformation of the plate cylinder in a radial direction at a time of high speed rotation.

In the rotating drum of the present invention, a sheet material is trained on the outer peripheral surface of the plate cylinder, and the rotating drum is rotated at high speed around the shaft of the plate cylinder.

Here, due to the rotating drum rotating at high speed, load (centrifugal force) directed outwardly in the radial direction is applied to the plate cylinder. However, the deformation suppressing device is provided at the plate cylinder. Even if the plate cylinder attempts to deform in the radial direction due to this load, deformation of the plate cylinder at the time of high speed rotation is suppressed by the deformation suppressing device.

Further, the deformation suppressing device is merely a structure which is additionally provided at the plate cylinder. Deformation of the plate cylinder in the radial direction at the time of high speed rotation can be suppressed with such a structure. Thus, as compared with a case in which the thickness of the plate cylinder is increased or a case in which ribs are molded integrally with the plate cylinder, the structure is simple, and accordingly, lower manufacturing costs are incurred.

In this way, the rotating drum of the present invention can suppress deformation at the time of high speed rotation, inexpensively and with a simple structure.

The rotating drum of the present invention has a sheet material holding mechanism which holds the sheet material at the plate cylinder. The deformation suppressing device may span between a first position which is at the inner peripheral surface of the plate cylinder and which corresponds to the sheet material holding mechanism, and a second position which opposes the first position at the opposite side, in the radial direction, of the first position.

In the rotating drum in this case, the region where the load (centrifugal force), which is applied outwardly in the radial direction of the plate cylinder at the time of high speed rotation, is a maximum (i.e., the region where deformation in the radial direction of the plate cylinder would be a maximum if no deformation suppressing device were provided) is the portion where the sheet material holding mechanism is provided.

Here, the deformation suppressing device spans between a portion (the first position), which is at the inner peripheral surface of the plate cylinder and which corresponds to the portion where the sheet material holding mechanism is provided, and the side opposite thereto (the second position). In this way, the deformation suppressing device is provided so as to correspond to the portion where the load applied to the plate cylinder is a maximum, and suppresses deformation of especially this portion of the plate cylinder. Deformation of the plate cylinder at the time of high speed rotation is thereby suppressed overall.

Further, when load outwardly in the radial direction is applied to the plate cylinder, only tensile load is applied to the deformation suppressing device. Thus, it suffices for the deformation suppressing device to be a structure having tensile rigidity. For example, the deformation suppressing device may be a rod-shaped or plate-shaped member, or may be a wire. Thus, the structure is simple, and does not lead to an increase in manufacturing costs.

In the rotating drum of the present invention, the plate cylinder may be formed such that the both ends thereof are closed, and the deformation suppressing device may be provided at the substantial center in the axial direction of the plate cylinder.

In the rotating drum in this case, because both ends of the plate cylinder are closed by covers or the like, deformation in the radial direction is suppressed. Accordingly, if no deformation suppressing device were provided, deformation of the plate cylinder would be a maximum at the substantially central portion, in the axial direction, of the plate cylinder.

Here, the deformation suppressing device is provided at the center in the axial direction of the plate cylinder. In this way, the deformation suppressing device is provided so as to correspond to the portion where deformation of the plate cylinder would be the greatest if no deformation suppressing device were provided, and the deformation suppressing device especially suppresses deformation of this portion of the plate cylinder. Deformation of the plate cylinder at the time of high speed rotation is thereby suppressed overall.

In the rotating drum of the present invention, the deformation suppressing device may be a disc-shaped member whose peripheral edge portion is fixed to the inner peripheral surface of the plate cylinder.

In the rotating drum in this case, the configuration of the deformation suppressing device is a disc shape corresponding to the inner peripheral surface of the plate cylinder. Therefore, even if centrifugal force is applied to the plate cylinder at the time of high speed rotation of the rotating drum and the plate cylinder attempts to deform, the cross-sectional configuration of the plate cylinder is maintained completely round. Accordingly, even in cases in which the rotating drum is applied to a printing plate exposure device, it is difficult for warping to arise at a recorded image, and therefore, the present invention is especially effective.

### BRIEF DESCRIPTION OF THE DRAWINGS

Fig. 1 is a perspective view showing the structure of a rotating drum relating to a first embodiment of the present invention.
Fig. 2 is a cross-sectional view along an axial direction of the rotating drum relating to the first embodiment of the present invention.
Fig. 3 is a side view schematically showing a printing plate exposure device to which the rotating drum relating to the first embodiment of the present invention is applied.
Fig. 4 is a perspective view showing the structure of a modified example of the rotating drum relating to the first embodiment of the present invention.
Fig. 5 is a perspective view showing the structure of a rotating drum relating to a second embodiment of the present invention.
Fig. 6 is a perspective view showing the structure of a rotating drum relating to a third embodiment of the present invention.
Fig. 7 is a cross-sectional view showing a cross-section orthogonal to an axis of a rotating drum relating to a fourth embodiment of the present invention.
Fig. 8 is a cross-sectional view along an axial direction of a rotating drum relating to a fifth embodiment of the present invention.
Fig. 9 is a cross-sectional view along an axial direction of a rotating drum relating to a sixth embodiment of the present invention.
Fig. 10 is a side view showing a state in which a rotating drum is rotating at high speed.
Fig. 11A is a cross-sectional view showing a cross-section orthogonal to an axis of a conventional rotating drum in which a plate cylinder has been formed to be thicker as a means for preventing deformation of the rotating drum.
Fig. 11B is a cross-sectional view showing a cross-section orthogonal to an axis of a conventional rotating drum in which a plurality of ribs have been provided at an inner periphery of a plate cylinder as a means for preventing deformation of the rotating drum.

### DETAILED DESCRIPTION OF THE EMBODIMENTS

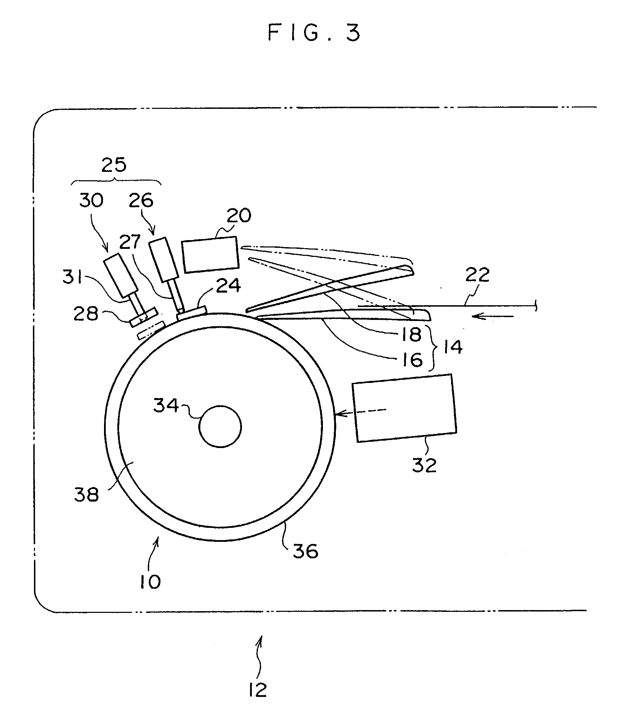

The schematic structure of a printing plate exposure device 12, to which a rotating drum 10 relating to a first embodiment of the present invention is applied, is shown in side view in Fig. 3.

The printing plate exposure device 12 is structured so as to be centered around the rotating drum 10. A conveying guide unit 14, a puncher 20, a holding mechanism operating unit 25, and a recording head 32 are disposed at the periphery of the rotating drum 10.

The conveying guide unit 14 is formed from a plate supplying guide 16 and a plate discharging guide 18. The conveying guide unit 14 can feed-in a printing plate 22 in a predetermined direction by unillustrated rollers or the like. The conveying guide unit 14 is disposed so as to be rotatable around the rear end thereof (the right end portion in Fig. 3), and the front end thereof can be made to correspond to the rotating drum 10 or to the puncher 20. The puncher 20 is for forming notches for positioning in the leading end of the printing plate 22 which is fed in by the plate supplying guide 16. Further, the plate discharging guide 18 feeds out the printing plate 22 to a printing device or the like which is the subsequent process.

The holding mechanism operating unit 25 is formed from a leading end grasping portion operating unit 26, a trailing end grasping portion attaching/removing unit 30, and a trailing end grasping portion 28. The leading end grasping portion operating unit 26 and the trailing end grasping portion attaching/removing unit 30 are provided with extending/retracting rods 27, 31, respectively, which can extend toward and retract from the outer peripheral surface of the rotating drum 10. The trailing end grasping portion 28 is provided at the distal end of the extending/retracting rod 31 of the trailing end grasping portion attaching/removing unit 30.

The recording head 32 records (exposes) an image on the image forming surface (photosensitive surface, emulsion surface) of the printing plate 22 by irradiating a laser beam, which has been modulated on the basis of image data, toward the rotating drum 10 (the printing plate 22) . The recording head 32 can move parallel to a shaft 34 of the rotating drum 10. In this way, while the printing plate exposure device 12 rotates the rotating drum 10 at high speed (main scanning), the printing plate exposure device 12 moves the recording head 32 synchronously (subscanning), so as to carry out so-called scan-exposure.

Hereinafter, the details of the rotating drum 10 will be described.

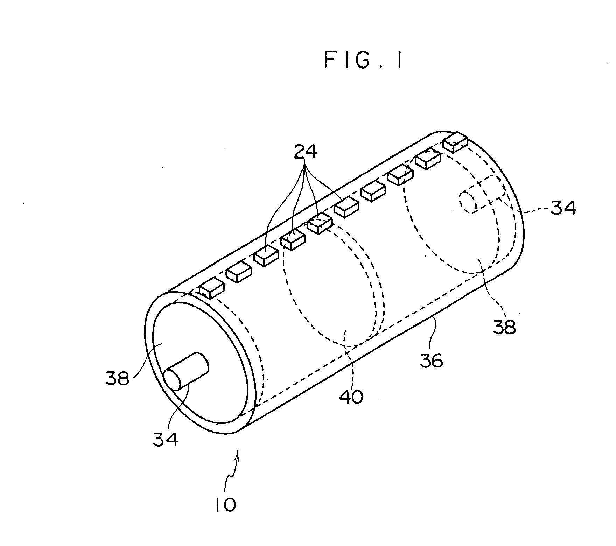

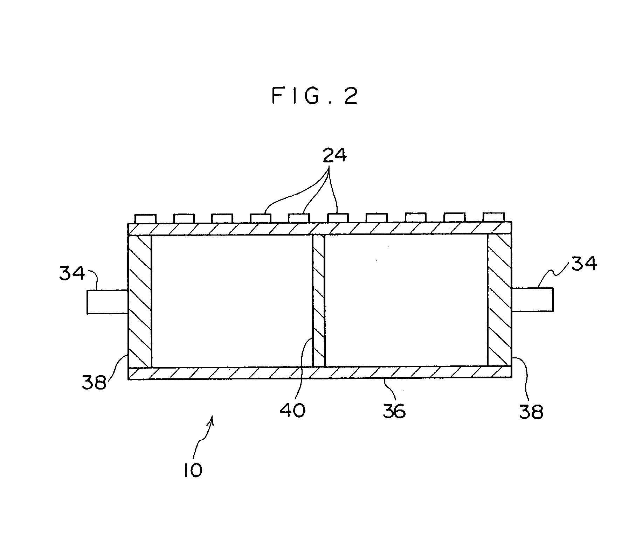

The structure of the rotating drum 10 is shown in perspective view in Fig. 1. Fig. 2 is a cross-sectional view along the axial direction of the rotating drum 10.

As shown in Fig. 1, the rotating drum 10 has a tubular plate cylinder 36 formed of aluminum or the like. The open ends of the plate cylinder 36 are closed by a pair of side covers 38. The shaft 34 is formed integrally with the substantial center of each side cover 38 so as to be directed toward the outer side of the plate cylinder 36. The shaft 34 is supported so as to be rotatable at an unillustrated bearing of the printing plate exposure device 12. Rotational force from a motor or the like is transmitted to the shaft 34 via a belt or a pulley or the like.

As shown in Fig. 2, a disc-shaped reinforcing member 40 serving as a deformation suppressing device is mounted to the substantial center in the axial direction of the interior of the plate cylinder 36. The peripheral edge of the reinforcing member 40 is fixed to the inner peripheral surface of the plate cylinder 36 by being welded over the entire periphery.

Leading end grasping portions 24 serving as a sheet material holding mechanism are provided at the outer peripheral surface of the plate cylinder 36 of the rotating drum 10. The leading end holding portions 24 are provided in one row over the entire axial direction of the plate cylinder 36. (In the present embodiment, a total of ten leading end grasping portions 24 are provided.) Next, operation of the present first embodiment will be described.

In the printing plate exposure device 12 having the above-described structure, the printing plate 22 is set on the plate supplying guide 16 by an unillustrated automatic printing plate separating/feeding device or the like. When the printing plate 22 is placed on the plate supplying guide 16, the plate supplying guide 16 is rotated to the position corresponding to the puncher 20, and the printing plate 22 is fed into the puncher 20. After notches for positioning are formed in the printing plate 22 by the puncher 20, the printing plate 22 is again placed on the plate supplying guide 16.

When the printing plate 22 is again placed on the plate supplying guide 16, the plate supplying guide 16 is rotated to the position corresponding to the rotating drum 10, and feeds in the printing plate 22 in a direction tangential to the rotating drum 10. When the leading end of the printing plate 22 is inserted between the plate cylinder 36 and the leading end grasping portions 24 of the rotating drum 10, the extending/retracting rod 27 of the leading end grasping portion attaching unit 26 is extended, and operates the leading end grasping portions 24. In this way, the leading end of the printing plate 22 is nipped between the plate cylinder 36 and the leading end grasping portions 24 of the rotating drum 10.

The rotating drum 10, which is nipping the leading end of the printing plate 22, is rotated counterclockwise in Fig. 3, and stops at a position at which the trailing end of the printing plate 22 opposes the trailing end grasping portion 28. When the rotating drum 10 stops, the extending/retracting rod 31 of the trailing end grasping portion attaching/removing unit 30 extends, and the trailing end grasping portion 28 is attached to the outer peripheral surface of the plate cylinder 36 of the rotating drum 10. In this way, the printing plate 22 is trained around the outer peripheral surface of the plate cylinder 36 of the rotating drum 10, and is held by the leading end grasping portion 24 and the trailing end grasping portion 28.

When the printing plate 22 is fixed to the plate cylinder 36, the rotating drum 10 is rotated at high speed in order to record (expose) an image onto the printing plate 22. When the rotating drum 10 is rotated at high speed, the recording head 32 is moved parallel to the axial direction of the rotating drum 10 while irradiating a laser beam, which is modulated on the basis of image data, toward the rotating drum 10 (the printing plate 22).

In this way, the recording head 32 which irradiates the laser beam is moved in a direction parallel to the axis of rotation (subscanning) with respect to the printing plate 22 which is being rotated at high speed (main scanning). An image is thereby recorded (scan-exposed) on the image forming layer of the printing plate 22.

Here, when the rotating drum 10 is rotated at high speed, load (centrifugal force) is applied to the plate cylinder 36 toward the outer side in the radial direction (the direction in which the plate cylinder 36 swells).

The disc-shaped reinforcing member 40 is fixed to the inner peripheral surface of the plate cylinder 36 along the entire periphery thereof. When load toward the outer side in the radial direction is applied to the plate cylinder 36, a tensile load is applied to the reinforcing member 40. In this way, even if the plate cylinder 36 attempts to deform, deformation of the plate cylinder 36 is suppressed due to the tensile rigidity of the reinforcing member 40.

Further, when the rotating drum 10 rotates at high speed, a larger load (centrifugal force) is applied to the portion of the plate cylinder 36 where the leading end grasping portions 24 are provided than to the other portions of the plate cylinder 36, due to the weight of the leading end grasping portions 24. Further, the both ends of the plate cylinder 36 are closed by the side covers 38. Accordingly, if the reinforcing member 40 were to not be provided at the plate cylinder 36, the deformation in the radial direction of the plate cylinder 36 would be the greatest at a portion, which is the substantial center in the axial direction of the plate cylinder 36 and at which the leading end grasping portions 24 are provided.

Here, the reinforcing member 40 is disc-shaped, and spans between a position, at the inner peripheral surface of the plate cylinder 36, corresponding to the leading end grasping portions 24 (a first position) , and a position at the side opposite thereto (a second position). Moreover, the reinforcing member 40 is provided at the substantial center in the axial direction of the plate cylinder 36. Namely, the reinforcing member 40 is provided so as to correspond to the portion at which deformation of the plate cylinder 36 in the radial direction would be the greatest if the reinforcing member 40 were not provided at the plate cylinder 36. The reinforcing member 40 suppresses deformation especially at this portion of the plate cylinder 36. Accordingly, deformation of the plate cylinder 36 during high speed rotation can be suppressed overall.

Further, the reinforcing member 40 is a single disc-shaped member. As compared with a case of making the plate cylinder 36 thicker or a case of providing a plurality of ribs in the axial direction at the inner periphery of the plate cylinder 36, the structure is simple, there is little increase in weight, and the manufacturing costs are not as expensive.

In this way, at the rotating drum 10 relating to the present first embodiment, deformation at the time of high speed rotation can be suppressed inexpensively and with a simple structure.

Moreover, because the reinforcing member 40 is disc-shaped, the cross-sectional configuration of the plate cylinder 36 can be maintained in a state which is close to completely round, even when the rotating drum 10 rotates at high speed. Therefore, it is difficult for warping to arise in the image recorded on the printing plate trained around the rotating drum 10.

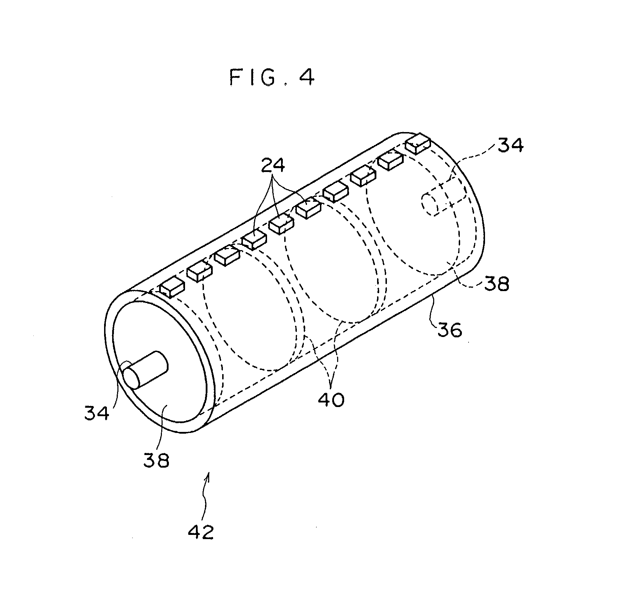

In the rotating drum 10 of the present first embodiment, a single disc-shaped reinforcing member 40 is provided at the substantial center in the axial direction of the plate cylinder 36. However, the number of reinforcing member(s) 40 and the position (s) at which the reinforcing member (s) 40 is/are disposed is not limited to the same. Namely, in cases in which the axial direction dimension of the rotating drum 10 must be made long, if the reinforcing member 40 is provided at only one place at the substantial center in the axial direction of the plate cylinder 36, it will be easy for deformation to arise at the two intermediate regions between the reinforcing member 40 and the respective side covers 38. Further, if the axial direction dimension of the rotating drum 10 is made long, the surface of the plate cylinder 36 may become wavy, and deformation in the radial direction of the plate cylinder 36 may become great at portions other than the substantial center in the axial direction of the plate cylinder 36. Accordingly, as in the modified example shown in Fig. 4, two reinforcing members 40 may be provided in accordance with the axial direction length of a rotating drum 42. Or, more than two reinforcing members 40 may be provided.

Next, another embodiment of the present invention will be described.

Note that parts which are basically the same as those of the above-described first embodiment are denoted by the same reference numerals as in the first embodiment, and description thereof is omitted.

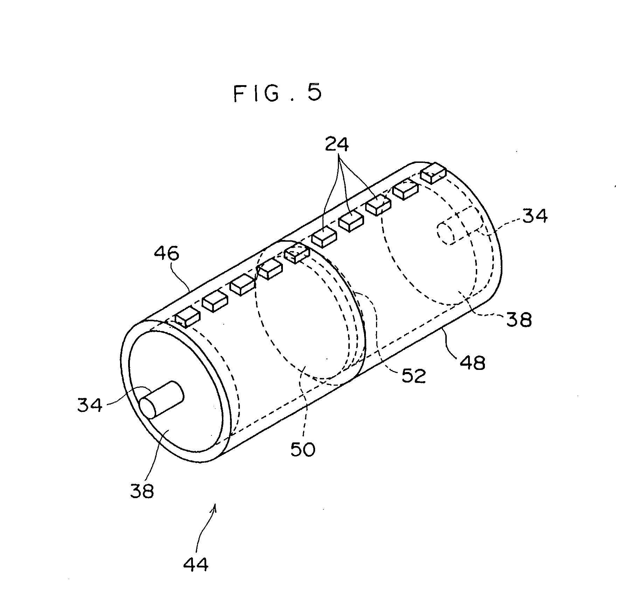

A perspective view of a rotating drum 44 relating to a second embodiment of the present invention is shown in Fig. 5.

The rotating drum 44 has a set of plate cylinders 46, 48 which are respectively formed to have axial direction lengths which are substantially half of the desired axial direction length of the rotating drum 44, and whose both open ends are closed in advance. The plate cylinder 46 and the plate cylinder 48 are connected by welding or the like in a state in which respective ones of side covers 50, 52 thereof oppose one another.

At the rotating drum 44 having the above-described structure, the plate cylinders 46, 48 are connected together. Therefore, if the side covers 50, 52 were not provided, the region where the deformation in the radial direction of the connected plate cylinders 46, 48 would be largest would be the position where the leading end grasping portions 24 are provided and the substantial center in the axial direction of the rotating drum 44 (the portion where the plate cylinder 46 and the plate cylinder 48 are connected).

Here, the side covers 50, 52 are disc-shaped, and are disposed at the substantial center in the axial direction of the rotating drum 44. Accordingly, the side covers 50, 52 function as deformation suppressing devices, and suppress deformation especially at that portion of the plate cylinders 46, 48. In this way, deformation of the plate cylinders 46, 48 at the time of high speed rotation can be suppressed overall.

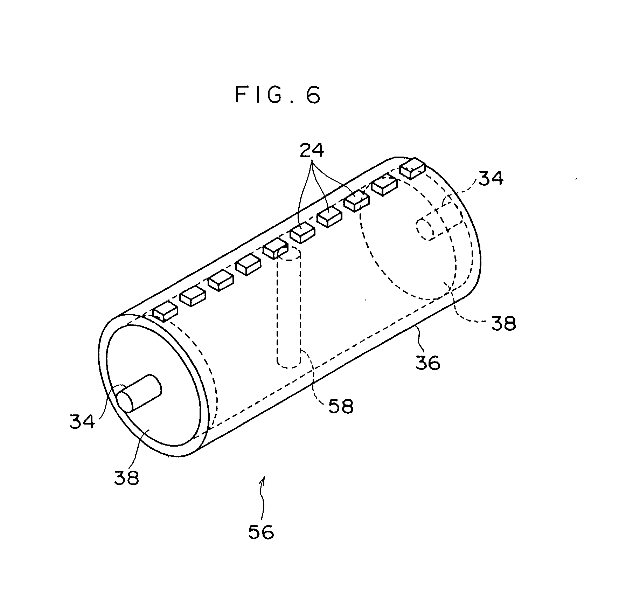

The structure of a rotating drum 56 relating to a third embodiment of the present invention is shown in perspective view in Fig. 6.

A reinforcing member 58 serving as a deformation suppressing device is provided at the interior of the plate cylinder 36 of the rotating drum 56. The reinforcing member 58 is a circular-rod-shaped member. One end of the reinforcing member 58 is fixed by welding to the substantial center in the axial direction of the plate cylinder 36 at a position, of the inner peripheral surface of the plate cylinder 36, corresponding to the leading end grasping portions 24. The reinforcing member 58 spans across the interior of the plate cylinder 36, and the other end thereof is fixed to the inner peripheral surface of the plate cylinder 36 at the radial direction opposite side of the position at which the one end is fixed.

In the rotating drum 56 having the above-described structure, if the reinforcing member 58 were not provided, the portion where deformation of the plate cylinder 36 in the radial direction would be the largest would be the substantial center in the axial direction at the position where the leading end grasping portions 24 are provided.

Here, the reinforcing member 58 is provided so as to correspond to the portion at which the radial direction deformation of the plate cylinder 36 would be the greatest if the reinforcing member 58 were not provided as described above. The reinforcing member 58 suppresses deformation especially at this portion of the plate cylinder 36. In this way, the deformation of the plate cylinder 36 at the time of high speed rotation can be suppressed overall.

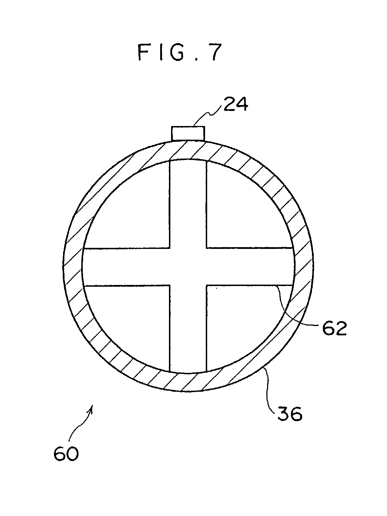

Fig. 7 is a cross-sectional view of a cross-section orthogonal to the rotational axis at the substantial center in the axial direction of a rotating drum 60 relating to a fourth embodiment of the present invention.

A reinforcing member 62 serving as a deformation suppressing device is provided at the substantial center in the axial direction at the interior of the plate cylinder 36 of the rotating drum 60. The reinforcing member 62 is formed as if two rod-shaped members were intersecting one another as seen in cross-sectional view.

The reinforcing member 62 having the above-described structure has the same functions as the reinforcing member 58 of the rotating drum 56 relating to the above-described third embodiment. Therefore, deformation of the plate cylinder 36 at the time of high speed rotation can be suppressed. Moreover, the reinforcing member 62 can suppress deformation in directions of two axes in a cross-section of the plate cylinder 36. Therefore, the cross-sectional configuration of the plate cylinder 36 can be maintained in a state of being close to completely round.

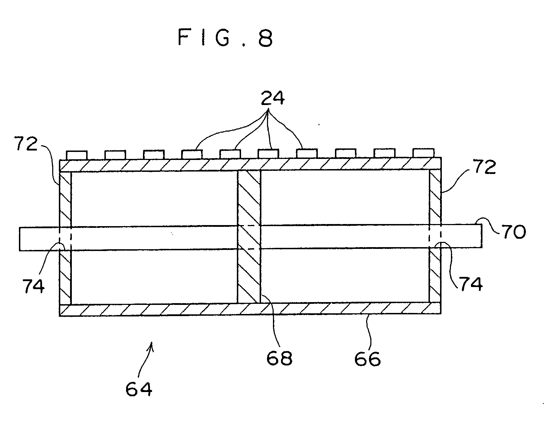

Fig. 8 is a cross-sectional view along the axial direction of a rotating drum 64 relating to a fifth embodiment of the present invention.

The rotating drum 64 has a tubular plate cylinder 66. A shaft supporting member 68 is fixed to the substantial center in the axial direction at the inner peripheral surface of the plate cylinder 66. The shaft supporting member 68 is formed in a disc-shape, and a shaft 70 passes through the substantially central portion thereof. The shaft 70 and the shaft supporting member 68 are fixed together. Moreover, a pair of disc-shaped reinforcing members 72 serving as deformation suppressing devices are provided at the open ends of the plate cylinder 66. A circular hole 74, which has substantially the same configuration as the cross-sectional configuration of the shaft 70, is formed in the substantial center of each reinforcing member 72. The holes 74 are fixed to the outer peripheral surface of the shaft 70.

In the rotating drum 64, radial direction deformation of the axial direction central portion of the plate cylinder 66 is suppressed by the shaft supporting member 68. Accordingly, when the rotating drum 64 rotates at high speed around the shaft 70, if the reinforcing members 72 were not provided, the portion where the radial direction deformation of the plate cylinder 66 due to centrifugal force would be the greatest would be the both end portions. In the rotating drum 64, the reinforcing members 72 are provided at the both end portions of the plate cylinder 66, and deformation especially of these portions of the plate cylinder 66 is suppressed. Accordingly, deformation of the plate cylinder 66 in the radial direction can be suppressed overall.

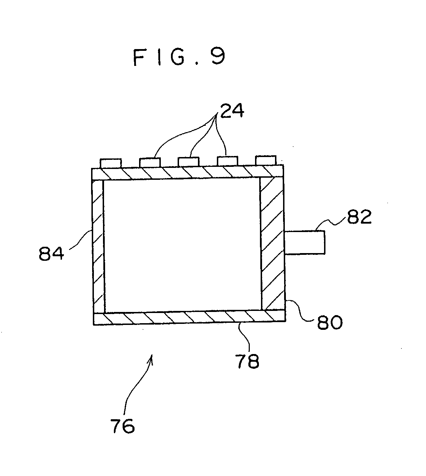

A rotating drum 76 relating to a sixth embodiment of the present invention is shown in Fig. 9.

The rotating drum 76 has a tubular plate cylinder 78. A disc-shaped side cover 80 is mounted to the inner peripheral surface of the plate cylinder 78 only at the right end portion in Fig. 9. A shaft 82 is mounted to the substantial center of the side cover 80. In this way, at the rotating drum 76, the rotating shaft 82 is supported in a cantilevered manner.

Next, a disc-shaped reinforcing member 84 serving as a deformation suppressing device is mounted to the left end of the plate cylinder 78.

At the rotating drum 76, at the right end of the plate cylinder 78, deformation in the radial direction is suppressed by the side cover 80. Accordingly, when the rotating drum 76 is rotating at high speed, if the reinforcing member 84 were not provided, the region where the radial direction deformation of the plate cylinder 78 due to centrifugal force would be the greatest would be the left end portion. In the rotating drum 76, the reinforcing member 84 is provided at the left end, and deformation of especially this portion of the plate cylinder 78 can be suppressed. Accordingly, deformation of the plate cylinder 78 in the radial direction is suppressed overall.

In this way, the present invention is also applicable to a rotating drum structured such that the rotating shaft 82 is supported in a cantilevered manner, as with the rotating drum 76 relating to the sixth embodiment.

As described above, the rotating drum relating to the present invention has the excellent effect that deformation at the time of high speed rotation can be suppressed inexpensively and with a simple structure.

## Claims

1. A rotating drum rotatable at high speed comprising:
a plate cylinder which is formed in a tubular shape and on whose outer peripheral surface a sheet material is trained, the plate cylinder including a shaft around which the rotating drum rotates; and
a deformation suppressing device provided at the plate cylinder and suppressing deformation of the plate cylinder in a radial direction at a time of high speed rotation.

2. The rotating drum of claim 1, further comprising:
a sheet material holding mechanism holding the sheet material on the plate cylinder,
wherein the deformation suppressing device spans between a first position which is at an inner peripheral surface of the plate cylinder and which corresponds to the sheet holding mechanism, and a second position which opposes the first position at an opposite side, in the radial direction, of the first position.

3. The rotating drum of claim 1 or claim 2, wherein the plate cylinder is formed such that both ends of the plate cylinder are closed, and the deformation suppressing device is provided at a substantial center in an axial direction of the plate cylinder.

4. The rotating drum of claim 2 or claim 3, wherein the deformation suppressing device is a disc-shaped member whose peripheral edge portion is fixed to the inner peripheral surface of the plate cylinder.

5. The rotating drum of any of claims 1 through 3, wherein the deformation suppressing device includes a disc-shaped reinforcing member, and a number of the reinforcing members is varied in accordance with a length of the shaft of the plate cylinder.

6. The rotating drum of claim 2 or claim 3, wherein the deformation suppressing device has a circular-rod-shaped reinforcing member, and end portions of the reinforcing member are fixed by welding.

7. The rotating drum of claim 6, further comprising a circular-rod-shaped second reinforcing member, and the second reinforcing member is disposed at a substantial center in the axial direction so as to be orthogonal to the reinforcing member.

8. The rotating drum of claim 1, further comprising:
a shaft supporting member provided at a central portion in an axial direction of the plate cylinder; and
a shaft passing through a central portion of the shaft supporting member,
wherein the deformation suppressing device includes a pair of disc-shaped reinforcing members, and the reinforcing members are provided at open end portions of the plate cylinder, and each reinforcing member includes a hole having a configuration equal to a cross-sectional configuration of the shaft, and the reinforcing members are fixed to an outer periphery of the shaft.

9. The rotating drum of claim 1, further comprising:
a disc-shaped side cover mounted to one end portion of the plate cylinder; and
a shaft mounted to a center of the side cover,
wherein the deformation suppressing device includes a reinforcing member mounted to another end portion of the plate cylinder.

10. The rotating drum of any of claims 1 through 9, wherein the sheet material is a printing plate, and the rotating drum is applied to a printing plate exposure device.
